# EUROPEAN PATENT APPLICATION

(11) **EP 4 629 127 A1**
(43) Date of publication of application: **08.10.2025**
(21) Application number: 24826218.0
(22) Date of filing: 18.06.2024
(51) Int. Cl.: G06F 30/27, H01M 10/42, G06N 20/00, G06F 119/08, G06F 111/10

(54) **APPARATUS AND METHOD FOR PREDICTING MAXIMUM TEMPERATURE**

(30) Priority: 20.06.2023 KR 20230079003
(71) Applicant: LG Energy Solution, Ltd., Seoul 07335 (KR)
(72) Inventor: LEE, So Jeong, Daejeon 34122 (KR); BAE, Gyujong, Daejeon 34122 (KR); CHA, Hun, Daejeon 34122 (KR)
(74) Representative: Plasseraud IP
(86) International application number: PCT/KR2024/008363
(87) International publication number: WO 2024/262901

(57) **Abstract**

An apparatus for predicting a highest temperature may include a preprocessing device including a first processor and a first memory storing a plurality of programs; and a temperature determination device including a second memory and a temperature prediction learning device.

The first processor may generate input data including cell design parameters for a candidate battery cell constituting a candidate battery module and simulation analysis conditions for a simulation predicting the highest temperature for the candidate battery cell. The second memory may store the input data, and during a learning operation, the temperature prediction learning device may perform machine learning by using training data among the input data stored in the second memory, and determine a temperature calculation formula predicting the highest temperature of the candidate battery cell through machine learning.

## Description

### [Technical Field]

### CROSS-REFERENCE TO RELATED APPLICATION

This application claims priority to and the benefit of Korean Patent Application No. 10-2023-0079003 filed in the Korean Intellectual Property Office on June 20, 2023, the entire contents of which are incorporated herein by reference.

The present disclosure relates to an apparatus and a method for predicting the highest temperature.

### [Background Art]

The highest battery temperature is one of main factors that determine a battery life. Battery manufacturers may measure the highest temperature for a plurality of candidate batteries that meet the required specifications. It is impossible to actually manufacture the plurality of candidate batteries to measure the highest temperature due to cost and time constraints.

To overcome this, a performance test is performed on a battery cell constituting each of the plurality of candidate batteries, various conditions are set to interpret a performance test result, and an analysis simulation is performed to predict the highest battery temperature based on the set conditions. Through the above series of processes, prediction of the highest temperature for each candidate battery takes considerable time and cost. Because prediction of the highest temperature for the plurality of candidate batteries may not be performed simultaneously, prediction of the highest temperature for all of the plurality of candidate batteries takes more time and cost. In this process, a problem in which prediction of the highest temperature is performed even on unnecessary candidate batteries may occur. In addition, a considerable amount of time is required to review the performance of each candidate battery based on an analysis simulation result.

### [Disclosure]

### [Technical Problem]

The present disclosure attempts to provide an apparatus and a method for predicting the highest temperature of a battery.

### [Technical Solution]

According to an aspect of the present disclosure, an apparatus for predicting a highest temperature includes a preprocessing device including a first processor and a first memory storing a plurality of programs; and a temperature determination device including a second memory and a temperature prediction learning device. The first processor may generate input data including cell design parameters for a candidate battery cell constituting a candidate battery module and simulation analysis conditions for a simulation predicting the highest temperature for the candidate battery cell. The second memory may store the input data, and during a learning operation, the temperature prediction learning device may perform machine learning by using training data among the input data stored in the second memory, and determine a temperature calculation formula predicting the highest temperature of the candidate battery cell through machine learning.

The temperature determination device may further include, during the learning operation, a second processor configured to control the second memory to provide the training data to the temperature prediction training device, and control the temperature prediction training device to perform machine learning with the training data.

The second processor may, after the learning operation, perform a normal operation of determining the highest temperature of the candidate battery cell according to the updated temperature calculation formula.

The temperature prediction learning device may perform the learning operation to determine a plurality of first to nth parameters affecting the highest temperature among the training data and a plurality of first to nth parameter coefficients respectively corresponding to the plurality of first to nth parameters. The training data may include the cell design parameters, the simulation analysis conditions, and the highest temperature for the candidate battery cell.

The simulation analysis conditions of the training data may include a maximum retention time of a maximum current for the candidate battery cell.

The temperature calculation formula may be a regression formula for items composed of products of the plurality of first to nth parameters and the plurality of first to nth parameter coefficients.

The first memory may store a resistance*capacitance (RC) extraction program deriving an RC value of the candidate battery cell. The first processor may derive the RC value of an equivalent circuit corresponding to the candidate battery cell by applying hybrid pulse power characterization (HPPC) test data for the candidate battery cell to the RC extraction program.

The first memory may store a highest temperature analysis program determining the highest temperature of the candidate battery cell. The first processor may determine the highest temperature by applying the cell design parameters, an RC value of an equivalent circuit corresponding to the candidate battery cell, and the simulation analysis conditions to the highest temperature analysis program.

The first memory may store a candidate derivation program determining the cell design parameters based on cell design data for a required specification, and deriving the candidate battery module according to the cell design parameters. The first processor may derive the candidate battery module by applying the cell design data to the candidate derivation program.

According to another aspect of the present disclosure, a method of predicting a highest temperature includes deriving an RC value of an equivalent circuit corresponding to a candidate battery cell constituting a candidate battery module; determining the highest temperature for the candidate battery cell by using cell design parameters for the candidate battery cell, the RC value, and simulation analysis conditions for a simulation predicting the highest temperature; and determining a temperature calculation formula predicting the highest temperature of the candidate battery cell by performing machine learning using training data including the cell design parameters, the RC value, and the simulation analysis conditions.

The method may further include, after a learning operation, determining the highest temperature of the candidate battery cell according to the updated temperature calculation formula.

The determining of the temperature calculation formula may include determining a plurality of first to nth parameters affecting the highest temperature among the training data and a plurality of first to nth parameter coefficients respectively corresponding to the plurality of first to nth parameters.

The temperature calculation formula may be a regression formula for items composed of products of the plurality of first to nth parameters and the plurality of first to nth parameter coefficients.

The training data may include a maximum retention time of a maximum current for the candidate battery cell.

The deriving of the RC value may include deriving the RC value by applying HPPC test data for the candidate battery cell to an RC extraction program.

The method may further include determining the cell design parameters based on cell design data for a required specification.

### [Advantageous Effects]

It is possible to provide an apparatus and a method for predicting the highest temperature based on cell design parameters and analysis conditions necessary for predicting the highest temperature.

### [Description of the Drawings]

FIG. 1 is a diagram illustrating an apparatus for predicting the highest temperature according to an embodiment.
FIG. 2 is a flowchart illustrating a preprocessing method for temperature prediction learning according to an embodiment.
FIG. 3 is a flowchart illustrating a temperature prediction learning method according to an embodiment.
FIG. 4 is a graph showing the highest temperature predicted according to stack numbers in a preprocessing device.

### [Mode for Invention]

In describing the embodiments disclosed in the present specification, when it is determined that detailed descriptions of related known technologies may obscure the gist of the embodiments disclosed in the present specification, the detailed description thereof will be omitted. In addition, the accompanying drawings are only for easy understanding of the embodiments disclosed in the present specification, do not limit the technical idea disclosed in the present specification, and should be understood to include all changes, equivalents or substitutes included in the spirit and scope of the present disclosure.

The terms including an ordinal number, such as first, second, etc., may be used to describe various components, but the components are not limited by the terms. The terms are used only for the purpose of distinguishing one component from another.

It will be understood that when a component is referred to as being "connected to" or "coupled to" another component, the component may be connected or coupled to the other component or intervening components may be present. In contrast, when a component is referred to as being "directly connected to" or "directly coupled to" another component, there are no intervening components present.

It will be further understood that the terms "comprises" and/or "comprising," when used in the present specification, specify the presence of stated features, integers, steps, operations, components, and/or parts, but do not preclude the presence or addition of one or more other features, integers, steps, operations, components, parts, and/or combinations thereof.

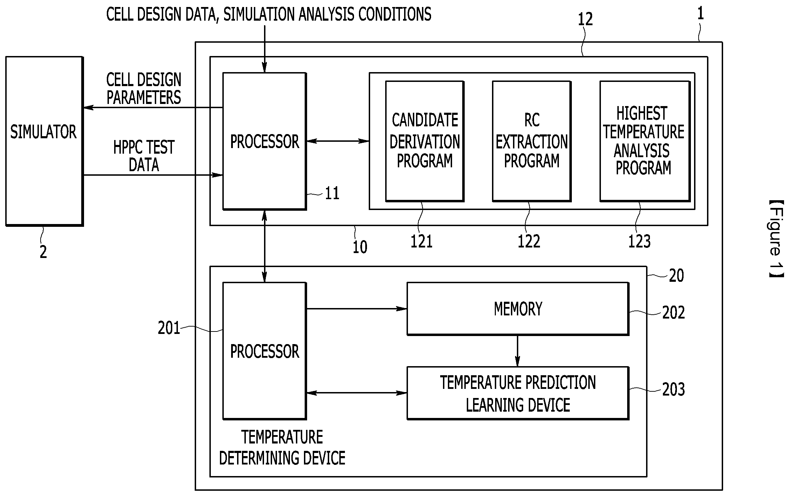

FIG. 1 is a diagram illustrating an apparatus for predicting the highest temperature according to an embodiment.

As shown in FIG. 1, the apparatus 1 for predicting the highest temperature may include a preprocessing device 10 and a temperature calculation device 20. The preprocessing device 10 may preprocess at least part of input data to be provided to the temperature calculation device 20. For example, the input data may include cell design parameters and analysis conditions (hereinafter, referred to as simulation analysis conditions) applied to an analysis simulation that determines the highest temperature. The cell design parameters may include cell size (length, width, and thickness), the number of cell stacks, the loading amount of positive electrode materials, cell capacity, the width/thickness ratio of cathode/anode foils, the thickness/length of cathode/anode tabs, the width/thickness of cathode/anode leads, and a SiO content. The simulation analysis conditions may include an initial temperature, an ambient temperature, a cooling water temperature, a quick charge state of charge (SOC) range, an initial SOC, a heat transfer coefficient (with respect to a battery module), an internal thickness of a bus bar, the maximum current, a quick charge target time, a maximum current maximum retention time, etc. The quick charge may mean that charging is performed with a high current equal to or greater than a certain value.

The preprocessing device 10 may include a processor 11 and a memory 12, and the memory 12 may include a candidate derivation program 121, an RC extraction program 122, and a highest temperature analysis program 123. The processor 11 may determine a candidate battery cell constituting a candidate battery module by applying cell design data provided to the preprocessing device 10 to the candidate derivation program 121, derive a resistance*capacitance (RC) value of the candidate battery cell by applying hybrid pulse power characterization (HPPC) test data for the candidate battery cell to the RC extraction program 122, and determine the highest temperature of the candidate battery cell by applying the simulation analysis conditions and the RC value to the highest temperature analysis program 123. The cell design data is data about a required specification, and may include a maximum current during charging, a time during which quick charge may be performed (hereinafter, a quick charge target time), a battery pack size, etc.

The apparatus 1 for predicting the highest temperature may obtain HPPC test data from a simulator 2 provided outside. The processor 11 may determine the candidate battery cell and provide the cell design parameters for the candidate battery cell to the simulator 2. The simulator 2 may obtain the HPPC test data by performing a physical model-based simulation based on chemical information among the cell design parameters for the candidate battery cell. For example, the simulator 2 may derive a voltage behavior of the candidate battery cell by performing the physical model-based simulation based on chemical information about a positive electrode material and a negative electrode material constituting the candidate battery cell. The HPPC test data may include data about the voltage behavior of the corresponding cell.

First, the processor 11 may load the candidate derivation program 121 from the memory 12, input the cell design data into the candidate derivation program 121, and execute the candidate derivation program 121. The candidate derivation program 121 may generate cell design parameters for a cell to configure a battery module based on the cell design data. For example, the candidate derivation program 121 may determine the size of the cell to configure the battery module and the number of a plurality of cells to be stacked (hereinafter, the number of cell stacks) to configure the battery module. The battery module refers to a unit energy storage device implemented by electrically connecting at least two battery cells. The candidate derivation program 121 may determine the size of the cell according to the cell design data, and determine the number of cell stacks that may be implemented with the determined size of the cell. The size of the cell may be defined as the length of the cell, the width of the cell, and the thickness of the cell. A battery pack may be implemented by electrically connecting a plurality of battery modules. The cell may include positive electrode material loading, negative electrode material loading, and a foil attached to each of the positive electrode material loading and the negative electrode material loading. The candidate derivation program 121 may determine stack numbers constituting the battery module in consideration of the thickness of the positive electrode material loading and the negative electrode material loading.

The candidate derivation program 121 may derive both sizes of the plurality of cells that meet the required specification and the number of cell stacks for each of the sizes of the plurality of cells, and may derive the candidate battery module in consideration of the production possibility of each of the plurality of battery modules implemented by the derived sizes of the plurality of cells and the derived number of cell stacks for each of the sizes of the plurality of cells. In the candidate derivation program 121, factors for determining the production possibility and standards for the factors may be installed.

In FIG. 1 and the description referring to FIG. 1, it is described that the memory 12 includes the candidate derivation program 121, and the processor 11 executes the candidate derivation program 121, but the present disclosure is not limited thereto. The memory 12 does not store the candidate derivation program 121, and the processor 11 may receive information about the candidate battery module from the outside.

The processor 11 may load the RC derivation program 122 from the memory 12, input the HPPC test data for the cell (the candidate battery cell) of the candidate battery module to the RC derivation program 122, and execute the RC derivation program 122. The RC derivation program 122 may implement an equivalent circuit representing the electrical characteristics of the corresponding cell based on the HPPC test data for the input candidate battery cell, and estimate the RC value of the candidate battery cell based on the equivalent circuit. The RC derivation program 122 may implement the equivalent circuit based on the voltage behavior of the cell according to the HPPC test data of the candidate battery cell, and may determine the RC value of the candidate battery cell by multiplying a resistance value and a capacitance value of the implemented equivalent circuit.

The processor 11 may load the highest temperature analysis program 123 from the memory 12, input the cell design parameters, the simulation analysis conditions, and the RC value of the candidate battery cell to the highest temperature analysis program 123, and execute the highest temperature analysis program 123. The highest temperature analysis program 123 may derive data necessary for temperature analysis among the cell design parameters, and determine the highest temperature by solving a governing equation for the highest temperature according to the derived data (e.g., size of the cell, temperature of cooling water, a heat transfer coefficient, etc.) and the RC value. In the highest temperature analysis program 123, the corresponding governing equation may be previously installed, the cell design parameters and the RC value may be independent variables, and the highest temperature may be a dependent variable in the governing equation. The highest temperature analysis program 123 may determine the highest temperature by performing a computation operation of solving the corresponding governing equation.

The temperature determination device 20 according to an embodiment may receive input data from the preprocessing device 10, store the input data, perform a training operation by using the stored input data, and perform a normal operation of predicting the highest temperature based on the input data provided from the preprocessing device 10 after the training operation.

The temperature determining device 20 may include a processor 201, a memory 202, and a temperature prediction learning device 203. The processor 201 may determine which operation between the normal operation and the learning operation is to be performed, control the operation of the temperature prediction learning device 203 when a determined operation mode is the learning operation, and perform temperature calculation when the determined operation mode is the normal operation.

The processor 201 may determine the operation mode according to a command provided from the outside, or may determine the operation mode according to preset specific control conditions and an operation mode corresponding to the specific control conditions. For example, the processor 201 may determine the operation mode as a learning operation every predetermined period or whenever accumulated new training data reaches a certain reference amount.

In the learning operation, the processor 201 may instruct the temperature prediction learning device 203 to perform machine learning. The processor 201 may determine training data among input data stored in the memory 202 and control the memory 202 and the temperature prediction learning device 203 so that the temperature prediction learning device 203 may read the training data from the memory 202. The processor 201 may determine data added after the most recent learning operation among input data stored in the memory 202 as training data. In the learning operation, the temperature prediction learning device 203 may perform machine learning to output a temperature calculation formula determining the highest temperature during cell charging by using the read training data. The temperature prediction learning device 203 may determine the temperature calculation formula through the learning operation and update the temperature calculation formula to the processor 201. In the learning operation, the processor 201 may control the highest temperature to be included in the training data. That is, the temperature prediction learning device 203 may perform machine learning to output the temperature calculation formula determining the highest temperature by receiving information related to the cell design parameters, information related to the highest temperature simulation analysis conditions, and the predicted highest temperature.

The temperature prediction learning device 203 may perform the learning operation to determine a plurality of first to nth parameters that affect the highest temperature among the training data and a plurality of first to nth parameter coefficients respectively corresponding to the plurality of first to nth parameters. The training data during the learning operation includes the cell design parameters, the simulation analysis conditions, and the highest temperature for the candidate battery cell. During the learning operation, the temperature prediction learning device 203 may determine parameters that affect the highest temperature among the cell design parameters and the simulation analysis conditions, that is, parameters having a significant level of correlation with the highest temperature, as the plurality of first to nth parameters. The temperature prediction learning device 203 may determine the plurality of first to nth parameter coefficients indicating degrees of correlation by learning the degrees of correlation between the plurality of first to nth parameters and the highest temperature in the learning operation. The temperature prediction learning device 203 may output the plurality of first to nth parameters and the plurality of first to nth parameter coefficients as output data through the learning operation by using the input data.

Furthermore, the temperature prediction learning device 203 may output the temperature calculation formula by using a combination of the plurality of first to nth parameters and the plurality of first to nth parameter coefficients. For example, the temperature calculation formula may be implemented as a regression equation for items composed of products of the plurality of first to nth parameters and the plurality of first to nth parameter coefficients respectively corresponding to the plurality of first to nth parameters.

In the normal operation, the processor 201 may perform an operation of determining the highest temperature by applying the input data to the temperature calculation formula. That is, in the learning operation, the temperature prediction learning device 203 may update the temperature calculation formula of the processor 201 through the learning operation, and in the normal operation, the processor 201 may determine the highest temperature by extracting information about the plurality of first to nth parameters constituting the temperature calculation formula from the input data and substituting the information into the temperature calculation formula. When the operation mode is the normal operation, the preprocessing device 10 may perform preprocessing only on the plurality of first to nth parameters.

For example, the temperature calculation formula may include stack numbers, the temperature of cooling water, the initial SOC, the quick charge time, the maximum current, and the maximum current retention time as a plurality of first to sixth parameters. In this regard, the plurality of first to sixth parameter coefficients may be positive real numbers or negative real numbers.

The operating method of the apparatus 1 for predicting the highest temperature according to an embodiment, that is, a method of predicting the highest temperature, may include a preprocessing method and a temperature prediction learning method.

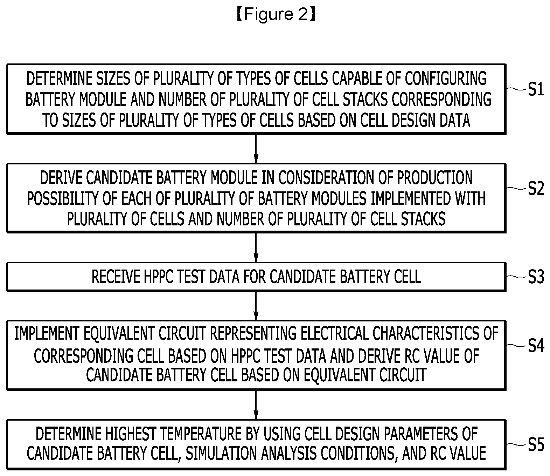

FIG. 2 is a flowchart illustrating a preprocessing method for temperature prediction learning according to an embodiment.

The processor 11 may determine sizes of a plurality of types of cells capable of configuring a battery module and the number of a plurality of cell stacks corresponding to the sizes of the plurality of types of cells based on the cell design data (S1).

The processor 11 may derive a candidate battery module in consideration of the production possibility of each of a plurality of battery modules implemented with the sizes of the plurality of types of cells and the number of the plurality of cell stacks derived in step S1 (S2).

The processor 11 may receive information about a candidate battery module from the outside instead of steps S1 and S2.

The processor 11 may transmit information about the candidate battery cell to the simulator 2, and receive HPPC test data for the candidate battery cell from the simulator 2 (S3).

The processor 11 may implement an equivalent circuit representing the electrical characteristics of the corresponding cell based on the HPPC test data for the candidate battery cell obtained in step S3, and may derive an RC value of the candidate battery cell based on the equivalent circuit (S4).

The processor 11 may determine the highest temperature by using cell design parameters of the candidate battery cell, simulation analysis conditions, and the RC value (S5).

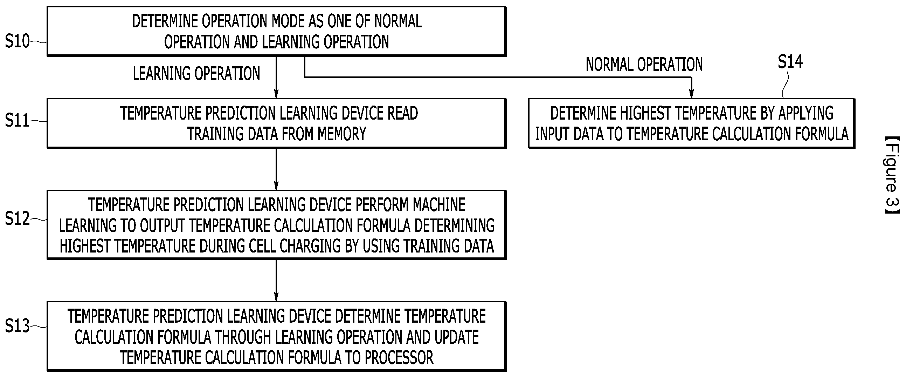

FIG. 3 is a flowchart illustrating a temperature prediction learning method according to an embodiment.

The processor 201 may determine an operation mode as one of a normal operation and a learning operation according to an external command or a control condition (S10).

When the operation mode determined in step S10 is the learning operation, the temperature prediction learning device 203 may read the training data from the memory 202 (S11).

In the learning operation, the temperature prediction learning device 203 may perform machine learning to output a temperature calculation formula determining the highest temperature during cell charging by using the read training data (S12).

The temperature prediction learning device 203 may determine the temperature calculation formula through the learning operation and update the temperature calculation formula to the processor 201 (S13).

When the operation mode determined in step S10 is the normal operation, the processor 201 may determine the highest temperature by applying input data to the temperature calculation formula (S14).

A plurality of first to nth parameters determined by the learning operation of the temperature determination device 20 include parameters for the maximum current maximum application time. The maximum current maximum application time refers to the maximum time among times for which the maximum current is applied to a candidate battery cell during charging. A current applied to the candidate battery cell during charging may vary, and a plurality of sections in which a fluctuating current is the maximum current may occur. Among the plurality of sections, the longest time is the maximum current maximum application time.

Table 1 below shows errors between measured temperatures and the highest temperatures predicted during a normal operation after the temperature determination device 20 performs a learning operation by using a plurality of first to nth parameters that do not include the maximum current maximum application time and error rates.

**(Table 1)**

| Number of stacks | Measured highest temperatures | Predicted highest temperatures | Errors | Error rates |
|---|---|---|---|---|
| St_n1 | 69.52 | 65.84 | 3.68 | 5.29% |
| St_n2 | 64.52 | 62.03 | 2.49 | 3.86% |
| St_n3 | 60.77 | 59.53 | 1.24 | 2.04% |
| St_n4 | 56.50 | 55.29 | 1.21 | 2.14% |
| St_n5 | 52.20 | 52.95 | 0.76 | 1.45% |

Table 2 below shows errors between measured temperatures and the highest temperatures predicted during the normal operation after the temperature determination device 20 performs the learning operation by using a plurality of first to nth parameters including the maximum current maximum application time and error rates.

**(Table 2)**

| Number of stacks | Measured highest temperatures | Predicted highest temperatures | Errors | Error rates |
|---|---|---|---|---|
| St_n1 | 69.52 | 69.06 | 0.46 | 0.66% |
| St_n2 | 64.52 | 64.18 | 0.34 | 0.52% |
| St_n3 | 60.77 | 59.65 | 1.12 | 1.85% |
| St_n4 | 56.50 | 55.60 | 0.90 | 1.59% |
| St_n5 | 52.20 | 52.70 | 0.50 | 0.96% |

A relationship of St_n1<St_n2<St_n3<St_n4<St_n5 is established between values indicating stack numbers in Tables 1 and 2. In Table 1, the highest error rate is 5.29 %, and in Table 2, the highest error rate is reduced to 1.85 %. That is, it may be seen that prediction accuracy of the highest temperature increases when learning using the plurality of first to nth parameters including the maximum current maximum application time.

Hereinafter, a method of determining training data for temperature prediction learning according to an embodiment will be described.

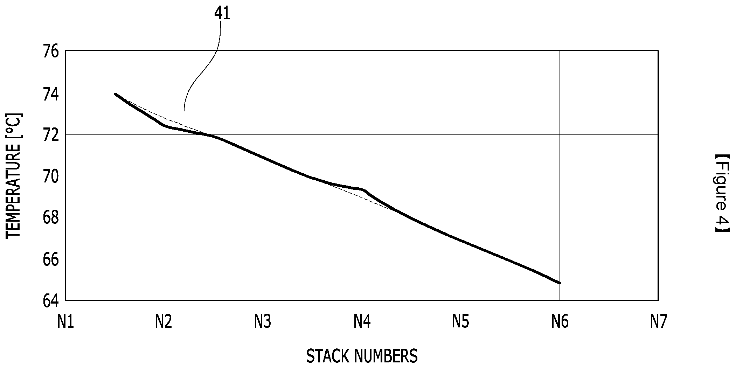

FIG. 4 is a graph showing the highest temperature predicted according to stack numbers in a preprocessing device.

In FIG. 4, a graph of the predicted highest temperature in each of stack numbers N1, N2, N3, N4, N5, N6, and N7 is illustrated. Variables N1 to N7 indicating stack numbers may be N1<N2<N3<N4<N5<N6<N7, and differences between two adjacent stacks in the variables N1 to N7 may be the same.

As shown in FIG. 4, when a line 41 indicated by the dotted line is a linear fitting line, the highest temperature predicted for the stack numbers N2 and N4 differs for the linear fitting line. Under the condition that data corresponding to the stack numbers N2 and N4 are excluded from training data, when the temperature prediction learning device 203 derives a temperature calculation formula by performing machine learning with the corresponding training data, a prediction difference as shown in Table 3 below occurs. Table 3 is a table showing the measured highest temperatures and the predicted highest temperatures under the condition of 15 minutes for quick charge. The predicted highest temperatures may be derived by the temperature calculation formula determined through learning by the temperature prediction learning device 203. When the temperature prediction learning device 203 derives the temperature calculation formula by performing machine learning with all training data including the stack numbers N2 and N4, a prediction difference as shown in Table 4 below occurs.

As shown in Table 3 and Table 4, the accuracy of prediction results of the highest temperature for the stack numbers N2 and N4 is improved when the entire training data is used for machine learning.

**(Table 3)**

| Number of stacks | Measured temperatures | Predicted temperatures | Differences | Percentages |
|---|---|---|---|---|
| N2 | 72.41 | 73.05 | 0.65 | 0.88% |
| N4 | 69.31 | 68.63 | 0.67 | 0.98% |

**(Table 4)**

| Number of stacks | Measured temperatures | Predicted temperatures | Differences | Percentages |
|---|---|---|---|---|
| N2 | 72.41 | 72.93 | 0.53 | 0.72% |
| N4 | 69.31 | 68.66 | 0.65 | 0.94% |

Table 5 below shows errors between the measured highest temperatures and the predicted highest temperatures under the conditions of quick charge times of 15 minutes, 18 minutes, 20 minutes, 25 minutes, and 30 minutes for the stack numbers N2 and N4 when the temperature prediction learning device 203 performs machine learning with training data and derives a temperature calculation formula under the condition in which data corresponding to the stack numbers N2 and N4 are excluded, and error rates.

**(Table 5)**

| Number of stacks/Quick charge time | Measured highest temperatures | Predicted highest temperatures | Errors | Error rates [%] |
|---|---|---|---|---|
| N2/15 minutes | 72.41 | 71.93 | 0.47 | 0.65 |
| N2/18 minutes | 67.06 | 67.24 | 0.18 | 0.26 |
| N2/20 minutes | 63.08 | 63.50 | 0.42 | 0.67 |
| N2/25 minutes | 58.55 | 58.75 | 0.20 | 0.34 |
| N2/30 minutes | 54.07 | 54.46 | 0.39 | 0.73 |
| N4/15 minutes | 69.31 | 70.23 | 0.92 | 1.33 |
| N4/18 minutes | 64.28 | 64.06 | 0.23 | 0.35 |
| N4/20 minutes | 60.57 | 60.51 | 0.06 | 0.10 |
| N4/25 minutes | 56.42 | 57.06 | 0.64 | 1.14 |
| N4/30 minutes | 52.29 | 52.13 | 0.15 | 0.29 |

Table 6 below shows errors between the measured highest temperatures and the predicted highest temperatures under the conditions of quick charge times of 15 minutes, 18 minutes, 20 minutes, 25 minutes, and 30 minutes for the stack numbers N2 and N4 when the temperature prediction learning device 203 performs machine learning with the entire training data and derives a temperature calculation formula, and error rates.

**(Table 6)**

| Number of stacks/Quick | Measured highest | Predicted highest | Errors | Error rates [%] |
|---|---|---|---|---|
| charge time | temperatures | temperatures | | |
| N2/15 minutes | 72.41 | 73.95 | 1.55 | 2.13 |
| N2/18 minutes | 67.06 | 67.99 | 0.93 | 1.38 |
| N2/20 minutes | 63.08 | 63.99 | 0.92 | 1.45 |
| N2/25 minutes | 58.55 | 59.09 | 0.55 | 0.93 |
| N2/30 minutes | 54.07 | 54.56 | 0.49 | 0.91 |
| N4/15 minutes | 69.31 | 68.46 | 0.85 | 1.22 |
| N4/18 minutes | 64.28 | 65.26 | 0.97 | 1.52 |
| N4/20 minutes | 60.57 | 61.02 | 0.44 | 0.73 |
| N4/25 minutes | 56.42 | 56.82 | 0.41 | 0.72 |
| N4/30 minutes | 52.29 | 52.56 | 0.28 | 0.53 |

The highest error rate in Table 5 is 1.33 %, which is less than the highest error rate of 2.13 % in Table 6. The results in Table 5 may be seen as overfitting the temperature calculation formula derived through learning.

As described above, including training data for all stack numbers that may be applied to a candidate battery module may improve the prediction accuracy of the highest temperature.

Although the embodiments of the present disclosure have been described in detail above, the scope of the present disclosure is not limited thereto, and various modifications and improvements made by a person of an ordinary skill in the field to which the present disclosure pertains also belong to the scope of the present disclosure.

## Claims

1. An apparatus for predicting a highest temperature, the apparatus comprising:
a preprocessing device including a first processor and a first memory storing a plurality of programs; and
a temperature determination device including a second memory and a temperature prediction learning device,
wherein the first processor is configured to generate input data including cell design parameters for a candidate battery cell constituting a candidate battery module and simulation analysis conditions for a simulation predicting the highest temperature for the candidate battery cell,
the second memory stores the input data, and
during a learning operation, the temperature prediction learning device is configured to perform machine learning by using training data among the input data stored in the second memory, and determine a temperature calculation formula predicting the highest temperature of the candidate battery cell through machine learning.

2. The apparatus of claim 1, wherein:
the temperature determination device further includes
a second processor configured to, during the learning operation, control the second memory to provide the training data to the temperature prediction training device, and control the temperature prediction training device to perform machine learning with the training data.

3. The apparatus of claim 2, wherein:
the second processor is configured to
after the learning operation, perform a normal operation of determining the highest temperature of the candidate battery cell according to the updated temperature calculation formula.

4. The apparatus of claim 2, wherein:
the temperature prediction learning device is configured to perform the learning operation to determine a plurality of first to nth parameters affecting the highest temperature among the training data and a plurality of first to nth parameter coefficients respectively corresponding to the plurality of first to nth parameters, and
the training data includes the cell design parameters, the simulation analysis conditions, and the highest temperature for the candidate battery cell.

5. The apparatus of claim 4, wherein:
the simulation analysis conditions include
a maximum retention time of a maximum current for the candidate battery cell.

6. The apparatus of claim 4, wherein:
the temperature calculation formula is a regression formula for items composed of products of the plurality of first to nth parameters and the plurality of first to nth parameter coefficients.

7. The apparatus of claim 1, wherein:
the first memory stores
a resistance*capacitance (RC) extraction program deriving an RC value of the candidate battery cell, and
the first processor is configured to
derive the RC value of an equivalent circuit corresponding to the candidate battery cell by applying hybrid pulse power characterization (HPPC) test data for the candidate battery cell to the RC extraction program.

8. The apparatus of claim 1, wherein:
the first memory stores
a highest temperature analysis program determining the highest temperature of the candidate battery cell, and
the first processor is configured to
determine the highest temperature by applying the cell design parameters, an RC value of an equivalent circuit corresponding to the candidate battery cell, and the simulation analysis conditions to the highest temperature analysis program.

9. The apparatus of claim 1, wherein:
the first memory stores
a candidate derivation program determining the cell design parameters based on cell design data for a required specification, and deriving the candidate battery module according to the cell design parameters, and
the first processor is configured to derive the candidate battery module by applying the cell design data to the candidate derivation program.

10. A method of predicting a highest temperature, the method comprising:
deriving a resistance*capacitance (RC) value of an equivalent circuit corresponding to a candidate battery cell constituting a candidate battery module;
determining the highest temperature for the candidate battery cell by using cell design parameters for the candidate battery cell, the RC value, and simulation analysis conditions for a simulation predicting the highest temperature; and
determining a temperature calculation formula predicting the highest temperature of the candidate battery cell by performing machine learning using training data including the cell design parameters, the RC value, and the simulation analysis conditions.

11. The method of claim 10, further comprising:
after the performing machine learning, determining the highest temperature of the candidate battery cell according to the updated temperature calculation formula.

12. The method of claim 10, wherein:
the determining of the temperature calculation formula includes
determining a plurality of first to nth parameters affecting the highest temperature among the training data and a plurality of first to nth parameter coefficients respectively corresponding to the plurality of first to nth parameters.

13. The method of claim 12, wherein:
the temperature calculation formula is a regression formula for items composed of products of the plurality of first to nth parameters and the plurality of first to nth parameter coefficients.

14. The method of claim 10, wherein:
the training data includes
a maximum retention time of a maximum current for the candidate battery cell.

15. The method of claim 10, wherein:
the deriving of the RC value includes
deriving the RC value by applying hybrid pulse power characterization (HPPC) test data for the candidate battery cell to an RC extraction program.

16. The method of claim 10, further comprising:
determining the cell design parameters based on cell design data for a required specification.
